Europäisches Patentamt

European Patent Office

Office européen des brevets

(11) Veröffentlichungsnummer: **0 575 740 B1**

(12) **EUROPÄISCHE PATENTSCHRIFT**

(45) Veröffentlichungstag der Patentschrift: **15.11.95**

(21) Anmeldenummer: **93107806.7**

(22) Anmeldetag: **13.05.93**

(51) Int. Cl.[6]: **C03C 15/02**, C03C 21/00, C03C 23/00

(54) Verfahren zur Verminderung der Blei- und/oder Bariumemission von Blei und/oder Barium enthaltenden Kristallglasgegenständen bei Berührung mit einer flüssigen Phase.

(30) Priorität: **22.05.92 DE 4217057**

(43) Veröffentlichungstag der Anmeldung:
**29.12.93 Patentblatt 93/52**

(45) Bekanntmachung des Hinweises auf die
Patenterteilung:
**15.11.95 Patentblatt 95/46**

(84) Benannte Vertragsstaaten:
**BE DE FR GB IE IT PT SE**

(56) Entgegenhaltungen:
**EP-A- 0 106 301**
**EP-A- 0 458 713**
**FR-A- 1 497 041**

**DATABASE WPI Week 8201, Derwent Publications Ltd., London, GB; AN 82-00792E &**
**JP-A-56155033**

(73) Patentinhaber: **Sälzle, Erich, Dr.**
**Nadistrasse 8**
**D-8000 München 40 (DE)**

(72) Erfinder: **Sälzle, Erich, Dr.**
**Nadistrasse 8**
**D-8000 München 40 (DE)**

(74) Vertreter: **von Hellfeld, Axel, Dr. Dipl.-Phys.**
**Wuesthoff & Wuesthoff**
**Patent- und Rechtsanwälte**
**Schweigerstrasse 2**
**D-81541 München (DE)**

EP 0 575 740 B1

**Beschreibung**

Die Erfindung betrifft ein Verfahren zur Verminderung der Blei- und/oder Bariumemission von Blei und/oder Barium enthaltenden Gebrauchsgegenständen aus Blei und/oder Barium enthaltenden Kristallgläsern, insbesondere sog. Bleikristall- und Barytgläsern, bei Berührung mit einer flüssigen Phase, insbesondere wäßrigen, wäßrig-sauren, alkoholischen und wäßrig-alkoholischen Flüssigkeiten, z.B. Essigsäurelösungen, Wein, Whisky, Likören und dgl.

Es ist allgemein bekannt, bleihaltige kristalline und bis zu 32%ige Bleikristallgläser sowie bis zu 7 Gew.-% BaO enthaltende Barytgläser ungeschliffen, geschliffen bzw. gepreßt zu Trinkgefäßen, Schüsseln, Vasen usw. zu verarbeiten. Durch den vielfach reichhaltigen Schliff wird die Oberfläche stark vergrößert und durch die vielen Kanten eine optimale Reflexion des einfallenden Lichtes und somit die gewünschte Brillanz der Oberfläche erzeugt.

Seit ca. 4 bis 5 Jahren werden bleihaltige und bariumhaltige Trinkgläser und Flaschen, nachdem sich die Analysentechnik stark verbessert hat, auf eine mögliche Blei- bzw. Bariumemission im sauren Medium und für Flaschen im alkoholischen Medium untersucht.

Untersuchungen zeigten, daß die Emissionen in den ersten 24 Stunden am größten sind und sich dann asymtotisch einem Sättigungswert nähern.

Die Bleiemission im sauren Medium wird dabei mit einer 4%igen Essigsäurelösung bei 20°C in Abhängigkeit von der Zeit gemessen.

Es ist ferner allgemein bekannt, Kristallgläser der beschriebenen Typen einer Säurepolitur zu unterwerfen. Diese kann z.B. mit einem Gemisch aus 20 bis 40%iger Flußsäure und 15 bis 30%iger Schwefelsäure durchgeführt werden. Aus der EP-A-0 106 301 ist weiterhin ein Verfahren zum Polieren von Glasgegenständen in einem Schwefelsäure und Flußsäure enthaltenden Polierbad bekannt, bei dem zur Steuerung der Fluorionenkonzentration Säuren, deren Dissoziationskonstante größer ist als die der Flußsäure, zugesetzt werden. Bei diesem verfahren läßt sich eine Politur mit einem sehr verminderten Oberflächenabtrag erreichen.

Nachteilig an den bekannten Kristallgläsern ist ihre Blei- und/oder Bariumemission bei Berührung mit flüssigen Phasen.

Aufgabe der vorliegenden Erfindung ist es daher, die Blei- und/oder Bariumemission von Blei und/oder Barium enthaltenden Kristallgläsern soweit zu vermindern, daß gesetzliche Regelungen nicht erforderlich werden.

Überraschenderweise wurde gefunden, daß sich die gestellte Aufgabe dadurch lösen läßt, daß man die Kristallglasgegenstände gegebenenfalls vor und/oder nach einer Säurepolitur mit einer 5 bis 45 gew.-%igen Alkalihydroxidlösung einer Temperatur von 20 bis 60°C behandelt, insbesondere in entsprechende Bäder einbringt.

Gemäß einer besonders vorteilhaften Ausgestaltung der Erfindung wird die erfindungsgemäße Behandlung mit einer Alkalihydroxidlösung mit einer Säurepolitur kombiniert, wobei die Säurepolitur nach einem der üblichen bekannten Verfahren durchgeführt werden kann.

Der Erfindung liegt insbesondere die Erkenntnis zugrunde, daß bei Behandlung von Kristallgläsern des beschriebenen Typs mit wäßrigen Alkalihydroxidlösungen durch Bildung von insbesondere Plumbaten und entsprechenden Bariumverbindungen Blei bzw. Barium aus der Oberfläche der Gläser soweit herausgelöst werden können, daß die Blei- bzw. Bariumemission um einen Faktor von mindestens 10 vermindert werden kann.

Dies gilt insbesondere dann, wenn diese Behandlung mit einer Säurepolitur kombiniert wird und die Behandlung als Vorbehandlung, als Nachbehandlung oder als Vor- und Nachbehandlung erfolgt. Die durch die Alkaliionen gebildeten Plumbate z.B. sind in der wäßrigen Alkalihydroxidlösung löslich und verarmen die Oberfläche an Blei. Das nicht gebundene Bleioxid in der Oberfläche wird herausgelöst und somit einer späteren Bleiemission entzogen.

Untersuchungen zeigten eine starke Abhängigkeit der Bleiemission von Glaskomposition, des Bleigehaltes, des Herstellungsverfahrens und des Herstellers, sowie ob z.B. Flaschen ungewaschen und unpoliert (säurepoliert) oder gewaschen und unpoliert befüllt wurden. Wurden die Flaschen säurepoliert, hat sich die Bleiemission im allgemeinen gegenüber den unpolierten halbiert, wobei dann die Unterschiede zwischen ungewaschen und säurepoliert und gewaschen und poliert nur noch marginal sind.

Für Flaschen (32 % PbO), die mit 40%igem Alkohol befüllt waren, konnten nach einer Standzeit von 1 Monat bei unterschiedlichen Ausgangspositionen folgende Bleiemissionen ermittelt werden:

| Flasche unpoliert, ungewaschen | 0,40 ppm Pb |
|---|---|
| Flasche unpoliert, gewaschen | 0,50 ppm Pb |
| Flasche säurepoliert, nicht vorbehandelt | 0,20 ppm Pb |
| Flasche säurepoliert, vorbehandelt | 0,10 ppm Pb |

Die säurepolierten Flaschen wurden mit dem mit Hilfe von Weinsäure fluorionen-gesteuerten Verfahren gemäß EP-A-0 106 301 bearbeitet und mit einer 10%igen Natronlaugelösung vorbehandelt.

Emissionsmessungen an Trinkgläsern (30 % PbO), die nach dem klassischen Verfahren (ohne Fluorionensteuerung, mit Säuren, deren Dissoziationskonstante größer als die der Flußsäure ist) und zum Vergleich mit dem mit Weinsäure fluorionen-gesteuerten Verfahren säurepoliert wurden, haben nach einer Behandlung mit 4%iger Essigsäure und einer Standzeit von 24 Stunden nachfolgende Bleiemissionen ergeben:

| Trinkglas unbehandelt, gewaschen | 220 ppm Pb |
|---|---|
| Trinkglas säurepoliert, gewaschen, Klassisches Verfahren | 200 ppm Pb |
| Trinkglas säurepoliert, vorbehandelt, gewaschen, fluorionen-gesteuertes Verfahren | 100 ppm Pb |

Die Untersuchungsergebnisse zeigen, daß die Bleiemission bei Bleikristallgläsern mittels Säurepolitur (klassisches Verfahren) um ca. 10 % reduziert werden kann, wobei diese Reduktion bei Anwendung einer fluorionen-gesteuerten Säurepolitur und alkalischer Vorbehandlung um weitere 50 % reduziert werden kann. Die Vorbehandlung erfolgte mit 10%iger Natronlauge bei 40°C.

Mit dem Ansteigen der Verweilzeit bei Vor- bzw. Nachbehandlung in der Alkalilösung wird die Bleiemission fast linear reduziert. Mit der Temperaturerhöhung der Behandlungsbäder wird die Bleiemission ebenfalls fast linear reduziert. Die wirtschaftliche Grenze liegt bei ca. 60°C. Mit dem Ansteigen der Konzentration der Alkalihydroxide in den Behandlungsbädern nimmt die Bleiemission ebenfalls linear ab.

Vorzugsweise wird als Alkalihydroxidlösung eine Kaliumhydroxidlösung verwendet, da die Verwendung einer Kaliumhydroxidlösung gegenüber einer Natriumhydroxidlösung eine Reduzierung der Bleiemission z.B. um 10 % bewirken kann.

Wird das erfindungsgemäße Verfahren mit einer Säurepolitur kombiniert, so werden besonders vorteilhafte Ergebnisse dann erhalten, wenn die Säurepolitur nach dem aus der EP-A-0 106 301 bekannten Verfahren erfolgt.

Da durch dieses Verfahren die zu erzielende Politur durch einen sehr reduzierten Oberflächenabtrag erreicht wird, kann in Kombination mit einer Vor- bzw. Vor- und Nachbehandlung sowie nur mit einer Nachbehandlung (bei Verwendung einer klassischen Säurepolitur) mit den oben beschriebenen Alkalihydroxidlösungen die erforderliche Reduzierung der Blei- und Bariumemission aus der Oberfläche von Kristallgläsern erzielt werden. Durch die Bewegung der Gläser in den Behandlungsbädern kann die erforderliche Verweilzeit bzw. bei gleicher Verweilzeit die Blei- und Bariumemission reduziert werden. Bei Anwendung einer klassischen Säurepolitur, bei der ein vergleichsweise starker Abtrag erfolgt, wird auf eine Alkalihydroxid-Vorbehandlung vorzugsweise verzichtet.

Zur Durchführung des erfindungsgemäßen Verfahrens besonders geeignet sind solche Kristallgläser mit 0,3 bis 1,0 Gew.-% Boroxid, 0,2 bis 0,5 Gew.-% Lithiumoxid und 0,2 bis 0,5 Gew.-% Zinkoxid.

Da sich die Vor- und Nachbehandlungsbäder mit Alkali- bzw. Erdalkaliplumbaten anreichern, wird das gelöste Plumbat, vorzugsweise nach entsprechender Anreicherung durch Einleiten von Kohlendioxid oder Zugabe von Carbonaten, gefällt, um die Lösungsfähigkeit zu erhalten.

Bei barythaltigen Gläsern erfolgt die Vor- und Nachbehandlung vorzugsweise bei 30 bis 60°C mit einer 20 bis 40%igen wäßrigen Natrium- bzw. Kaliumhydroxidlösung. Die Vorbehandlung liegt vorzugsweise zwischen 5 und 20 Minuten, die Zeit der Nachbehandlung liegt vorzugsweise zwischen 10 und 20 Minuten. Die Bariumkonzentration in 4%iger Essigsäure nach einer Standzeit von 24 Stunden bei 25°C wurde mit 25 ppB gemessen.

Gemäß einer besonders bevorzugten Ausgestaltung der Erfindung werden die Glasgegenstände vor der Säurepolitur mindestens 10, vorzugsweise 10 bis 25 Minuten lang und nach der Säurepolitur mindestens 10, vorzugsweise 10 bis 40 Minuten lang mit einer Alkalihydroxidlösung behandelt.

Gemäß einer weiteren bevorzugten Ausgestaltung der Erfindung erfolgt die Säurepolitur mit einem Gemisch aus einer 20 bis 40%igen Flußsäure und einer 15 bis 30%igen Schwefelsäure, und die Glasgegenstände werden nach der Säurepolitur 10 bis 40 Minuten lang mit der Alkalihydroxidlösung behandelt.

Gemäß einer weiteren bevorzugten Ausgestaltung der Erfindung erfolgt die Säurepolitur mit einem Gemisch aus einer 0,5 bis 10%igen Flußsäure und einer 40 bis 75%igen Schwefelsäure, und die Glasgegenstände werden vor der Säurepolitur 10 bis 40 Minuten lang und nach der Säurepolitur 10 bis 40 Minuten lang mit einer Alkalihydroxidlösung behandelt.

Wird bei der Säurepolitur die Fluorionenkonzentration durch eine dritte Säure, deren Dissoziationskonstante größer ist als die der Flußsäure, gesteuert, so besteht diese dritte Säure vorzugsweise aus Wein-, Oxal-, Malon-, Citronen-, Essig-, Phosphor-, Silicofluorwasserstoffsäure oder Mischungen derselben. Vorzugsweise wird die dritte Säure in Abhängigkeit von der Zusammensetzung der Glasgegenstände in einer Konzentration von 0,5 bis 14 g pro Liter Behandlungssäure verwendet.

Die folgenden Beispiele sollen das Verfahren der Erfindung näher erläutern.

Die Untersuchungen wurden mit klassischen Bleikristallgläsern mit einem Bleigehalt von 24 bis 32%, die die höchste Bleiemission vorweisen, durchgeführt.

Beispiel 1

Handelsübliche Trinkgläser mit einem PbO-Gehalt von 30 oder 24 % wurden nach dem aus der EP-A-0 106 301 bekannten Verfahren säurepoliert und den aus der folgenden Tabelle ersichtlichen Vor- und Nachbehandlungen unterworfen. Anschließend wurde die Bleiemission in ppm in 4%iger Essigsäure nach 24 Stunden ermittelt.

## Tabelle 1

| Trinkgläser (30% PbO) Vers.-Nr. | Vorbehandlung 30% NaOH 40°C | Nachbehandlung 30% NaOH 40°C | Bleiemission ppm in 4%iger Essigsäure |
|---|---|---|---|
| 1) säurepoliert | keine | keine | 1,6 |
| 2) säurepoliert | 3 min | 3 min | 1,3 |
| 3) säurepoliert | 5 min | 5 min | 1,2 |
| 4) säurepoliert | 20 min | 20 min | 0,75 |
| Trinkgläser (24% PbO) | | | |
| 5) säurepoliert | 20 min | 20 min | 0,04 |

Die Beispiele lassen eindeutig die lineare Abhängigkeit der Einwirkungsdauer der Vor- und Nachbehandlung mit alkalischen Lösungen auf die Bleiemission erkennen.

Beispiel 2

Weitere handelsübliche Trinkgläser mit einem Pbo-Gehalt von 30 oder 24 % wurden nach der Säurepolitur mit Natrium- oder Kaliumhydroxidlösungen vor- und nachbehandelt, um den Einfluß der verwendeten Alkalien zu bestimmen.

Es wurden die in der folgenden Tabelle 2 zusammengestellten Ergebnisse erhalten.

## Tabelle 2

| Trinkgläser (30% PbO) Vers.-Nr. | Vorbhlg 40% NaOH 50°C 30 min | Nachbhlg 40% NaOH 50°C 30 min | Bleiemiss. Essigsr 4% 24 h ppm | Vorbhlg 40% KOH 50°C 30 min | Nachbhlg 40% KOH 50°C 30 min | Bleiemiss. Essigsr 4% 24 h ppm |
|---|---|---|---|---|---|---|
| 6) säurepol. | keine | keine | 1,5 | | | |
| 7) säurepol. | ja | ja | 0,4 | ja | ja | 0,3 |
| | | | Wasser 24 h | | | Wasser 24 h |
| 8) säurepol. | ja | ja | 0,2 | ja | ja | 0,2 |

| Trinkgläser (24% PbO) | | | Essigsr 4% | | | |
|---|---|---|---|---|---|---|
| 9) säurepol. | ja | ja | 0,03 | ja | ja | 0,02 |

Die Versuche 6 und 7 veranschaulichen den vorteilhaften Einfluß einer Vor- und Nachbehandlung mit Natrium- und Kaliumhydroxidlösungen. Versuch 7 zeigt die günstigere Wirkung von Kaliumhydroxidlösungen gegenüber Natriumhydroxidlösungen. Ein Vergleich der Ergebnisse der Versuche 7 und 9 veranschaulicht den Einfluß der Glaszusammensetzung.

### Patentansprüche

1. Verfahren zur Verminderung der Blei- und/oder Bariumemission von Blei und/oder Barium enthaltenden Kristallglasgegenständen bei Berührung der Kristallglasgegenstände mit einer flüssigen Phase, dadurch **gekennzeichnet,** daß man die Kristallglasgegenstände gegebenenfalls vor und/oder nach einer Säurepolitur mit einer 5 bis 45 gew.-%igen Alkalihydroxidlösung einer Temperatur von 20 bis 60 °C behandelt.

2. Verfahren nach Anspruch 1, dadurch **gekennzeichnet,** daß man 5 bis 45%ige Natrium-, Kalium- oder Natrium-Kaliumhydroxidlösungen verwendet.

3. Verfahren nach Anspruch 1 oder 2, dadurch **gekennzeichnet,** daß man die Glasgegenstände in die Alkalihydroxidlösungen einbringt und hierin zur Verkürzung der Reaktionszeit bewegt.

4. Verfahren nach einem der Ansprüche 1 bis 3, dadurch **gekennzeichnet,** daß die Behandlungsdauer mit einer Alkalihydroxidlösung jeweils mindestens 10 Minuten, vorzugsweise mindestens 20 Minuten beträgt.

5. Verfahren nach einem der Ansprüche 1 bis 4, dadurch **gekennzeichnet,** daß die Glasgegenstände vor der Säurepolitur mindestens 10, vorzugsweise 10 bis 25 Minuten lang und nach der Saurepolitur mindestens 10, vorzugsweise 10 bis 40 Minuten lang mit einer Alkalihydroxidlösung behandelt werden.

6. Verfahren nach einem der Ansprüche 1 bis 4, dadurch **gekennzeichnet,** daß die Säurepolitur mit einem Gemisch aus einer 20 bis 40%igen Flußsäure und einer 15 bis 30%igen Schwefelsäure erfolgt und daß die Glasgegenstände nach der Säurepolitur 10 bis 40 Minuten lang mit der Alkalihydroxidlösung behandelt werden.

7. Verfahren nach einem der Ansprüche 1 bis 5,
dadurch **gekennzeichnet,** daß die Säurepolitur mit einem Gemisch aus einer 0,5 bis 10%igen Flußsäure und einer 40 bis 75%igen Schwefelsäure erfolgt und die Glasgegenstände vor der Säurepolitur 10 bis 40 Minuten lang und nach der Säurepolitur 10 bis 40 Minuten lang mit einer Alkalihydroxidlösung behandelt werden.

8. Verfahren nach einem der Ansprüche 1 bis 7,
dadurch **gekennzeichnet,** daß bei der Säurepolitur die Fluorionenkonzentration durch eine dritte Säure, deren Dissoziationskonstante größer ist als die der Flußsäure, gesteuert wird.

9. Verfahren nach Anspruch 8,
dadurch **gekennzeichnet,** daß man als dritte Säure Wein-, Oxal-, Malon-, Citronen-, Essig-, Phosphor-, Silicofluorwasserstoffsäure oder Mischungen derselben verwendet.

10. Verfahren nach einem der Ansprüche 8 und 9,
dadurch **gekennzeichnet,** daß man die dritte Säure in Abhängigkeit von der Zusammensetzung der Glasgegenstände in einer Konzentration von 0,5 bis 14 g pro Liter Behandlungssäure verwendet.

11. Verfahren nach einem der Ansprüche 1 bis 10,
dadurch **gekennzeichnet,** daß man durch Einleiten von Kohlendioxid in die Alkalihydroxidlösungen und/oder Zugabe von Carbobaten in diesen gelöste Plumbate in Form von Bleicarbonaten ausfällt und diese gegebenenfalls abtrennt.

12. Verfahren nach einem der Ansprüche 1 bis 11,
dadurch **gekennzeichnet,** daß man dem Verfahren Glasgegenstände unterwirft, die 0,3 bis 1,0 Gew.-% Boroxid, 0,2 bis 0,5 Gew.-% Lithiumoxid sowie 0,2 bis 0,5 Gew.-% Zinkoxid enthalten.

## Claims

1. A method of reducing the lead and/or barium emission of crystal glass objects containing lead and/or barium on contact of said crystal glass objects with a liquid phase, characterized in that said crystal glass objects are treated if applicable before and/or after acid polishing with a 5 to 45% by weight alkali hydroxide solution having a temperature of 20 to 60°C.

2. The method according to claim 1, characterized in that 5 to 45% sodium, potassium or sodium-potassium hydroxide solutions are used.

3. The method according to claim 1 or 2, characterized in that said glass objects are introduced into said alkali hydroxide solutions and are moved therein to abbreviate the reaction time.

4. The method according to claim 1, characterized in that the treatment with an alkali hydroxide solution lasts for at least 10 minutes, preferably at least 20 minutes.

5. The method according to claim 1, characterized in that said glass objects are treated with an alkali hydroxide solution for at least 10, preferably 10 to 25 minutes prior to said acid polishing, and for at least 10, preferably 10 to 40 minutes after said acid polishing.

6. The method according to claim, characterized in that said acid polishing takes place with a mixture of a 20 to 40% hydrofluoric acid and a 15 to 30% sulfuric acid and that said glass objects are treated with said alkali hydroxide solution for 10 to 40 minutes after said acid polishing.

7. The method according to claim 1, characterized in that said acid polishing takes place with a mixture of a 0.5 to 10% hydrofluoric acid and a 40 to 75% sulfuric acid and said glass objects are treated with an alkali hydroxide solution for 10 to 40 minutes prior to said acid polishing and for 10 to 40 minutes after said acid polishing.

EP 0 575 740 B1

8. The method according to claim 1, characterized in that the fluorine ion concentration in said acid polishing is controlled by a third acid having a dissociation constant greater than that of said hydrofluoric acid.

9. The method according to claim 8, characterized in that tartaric, oxalic, malonic, citric, acetic, phosphoric or fluorosilicic acid or mixtures thereof are used as said third acid.

10. The method according to claim 8, characterized in that said third acid is used in a concentration of 0.5 to 14 g per liter of treatment acid, depending on the composition of said glass objects.

11. The method according to claim 1, characterized in that by the introduction of carbon dioxide into said alkali hydroxide solutions and/or with the addition of carbonates, plumbates dissolved therein are precipitated as lead carbonates and, if applicable, said lead carbonates are separated.

12. The method according to claim 1, characterized in that glass objects containing 0.3 to 1.0% by weight of boron oxide, 0.2 to 0.5% by weight of lithium oxide, and 0.2 to 0.5% by weight of zinc oxide are subjected to said method.

**Revendications**

1. Procedé pour la réduction de l'émission de plomb et/ou de baryum à partir d'objets en cristal contenant du plomb et/ou du baryum lors d'un contact des objets en cristal avec une phase liquide, caractérisé en ce qu'on traite les objets en cristal éventuellement avant et/ou après un polissage à l'acide avec une solution d'hydroxyde d'alcali de 5 à 40 % en poids à une température de 20 à 60°C.

2. Procédé selon la revendication 1, caractérisé en qu'on utilise des solutions d'hydroxydes de sodium, de potassium ou de sodium-potassium de 5 à 45 %.

3. Procédé selon la revendication 1 ou 2, caractérisé en ce qu'on amène les objets en verre dans les solutions d'hydroxydes d'alcalis et qu'on les déplace dans celles-ci pour diminuer la durée de réaction.

4. Procédé selon l'une quelconque des revendications 1 à 3, caractérisé en ce que la durée de traitement avec une solution d'hydroxyde d'alcali est à chaque fois au moins de 10 min, de préférence au moins de 20 min.

5. Procédé selon l'une quelconque des revendications 1 à 4, caractérisé en ce qu'on traite les objets en verre avant le polissage à l'acide pendant au moins 10, de préférence de 10 à 25 min et après le polissage à l'acide pendant au moins 10, de préférence de 10 à 40 min avec une solution d'hydroxyde d'alcali.

6. Procédé selon l'une quelconque des revendications 1 à 4, caractérisé en ce qu'on effectue le polissage à l'acide avec un mélange constitué d'un acide fluorhydrique de 20 à 40 % et d'un acide sulfurique de 15 à 30 % et en ce qu'on traite les objets en verre après le polissage à l'acide pendant 10 à 40 min avec la solution d'hydroxyde d'alcali.

7. Procédé selon l'une quelconque des revendications 1 à 5, caractérisé en ce qu'on effectue le polissage à l'acide avec un mélange constitué d'un acide fluorhydrique de 0,5 à 10 % et d'un acide sulfurique de 40 à 75 % et qu'on traite les objets en verre avant le polissage à l'acide pendant 10 à 40 min et après le polissage à l'acide pendant 10 à 40 min avec une solution d'hydroxyde d'alcali.

8. Procédé selon l'une quelconque des revendications 1 à 7, caractérisé en ce que pour le polissage à l'acide, on régule la concentration en ions fluor par l'intermédiaire d'un troisième acide dont la constante de dissociation est supérieure à celle de l'acide fluorhydrique.

9. Procédé selon la revendication 8, caractérisé en ce qu'on utilise comme troisième acide de l'acide tartrique, oxalique, malonique, citrique, acétique, phosphorique, silicofluorhydrique ou des mélanges de ceux-ci.

7

**10.** Procédé selon l'une quelconque des revendications 8 et 9, caractérisé en ce qu'on utilise le troisième acide selon la composition des objets en verre avec une concentration de 0,5 à 14 g/l d'acide de traitement.

**11.** Procédé selon l'une quelconque des revendications 1 à 10, caractérisé en ce que par l'introduction de dioxyde de carbone dans les solutions d'hydroxydes d'alcalis et/ou addition de carbonates dans celles-ci, on fait précipiter les plombates dissous dans la forme de carbonates de plomb et on sépare éventuellement ceux-ci.

**12.** Procédé selon l'une quelconque des revendications 1 à 11, caractérisé en ce qu'on soumet au procédé des objets en verre qui contiennent de 0,3 à 1,0 % en poids d'oxyde de bore, de 0,2 à 0,5 % en poids d'oxyde de lithium ainsi que de 0,2 à 0,5 % en poids d'oxyde de zinc.